Europäisches Patentamt

(19) European Patent Office

Office européen des brevets

(11) EP 0 655 887 B1

(12) EUROPÄISCHE PATENTSCHRIFT

(45) Veröffentlichungstag und Bekanntmachung des Hinweises auf die Patenterteilung:
22.05.1996 Patentblatt 1996/21

(51) Int. Cl.$^6$: **A01D 41/12**, G01F 1/00, G01F 1/74, G01F 23/26

(21) Anmeldenummer: 93919072.4

(22) Anmeldetag: 17.08.1993

(86) Internationale Anmeldenummer:
PCT/EP93/02185

(87) Internationale Veröffentlichungsnummer:
WO 94/04019 (03.03.1994 Gazette 1994/06)

(54) **VORRICHTUNG ZUR MESSUNG EINES MASSESTROMES**

MASS FLOW RATE MEASUREMENT DEVICE

DISPOSITIF DE MESURE DU DEBIT MASSIQUE

(84) Benannte Vertragsstaaten:
**BE DE DK FR GB IT**

(30) Priorität: **22.08.1992 DE 4227922**
**03.06.1993 DE 4318477**

(43) Veröffentlichungstag der Anmeldung:
**07.06.1995 Patentblatt 1995/23**

(73) Patentinhaber: **CLAAS KGaA**
**D-33428 Harsewinkel (DE)**

(72) Erfinder:
• **BÖTTINGER, Stefan**
**D-33647 Bielefeld (DE)**
• **WEIGELT, Horst**
**D-33332 Gütersloh (DE)**
• **HORN, Klaus**
**D-38126 Braunschweig (DE)**
• **YANG, Weiping**
**D-47119 Duisburg (DE)**

(74) Vertreter: **Hanewinkel, Lorenz, Dipl.-Phys.**
**Patentanwalt**
**Ferrariweg 17a**
**D-33102 Paderborn (DE)**

(56) Entgegenhaltungen:
WO-A-85/00087          DE-A- 1 942 773
DE-A- 4 105 857

**Beschreibung**

Die Erfindung betrifft eine Vorrichtung zur Messung eines Massestromes, der am Ausgang eines Elevators an einer Förderschachtwandung, insbesondere einer Erntemaschine, umgelenkt wird, so daß er ein geschwindigkeitshomogenes, geschichtetes Dielektrikum in einem dort angeordneten Durchsatz-Meßkondensator bildet. Der erste Kondensatorbelag des Durchsatz-Meßkondensators ist massestromseitig, der zweite Kondensatorbelag beabstandet zum Massestrom angeordnet. Dabei ist der erste Kondensatorbelag mit einer Schutzelektrode eingefaßt, die durch einen Impedanzwandler mit dem eingefaßten Kondensatorbelag auf gleichem Potential gehalten ist. Der zweite Kondensatorbelag ist durch eine dem ersten Kondensatorbelag gegenüberliegende Förderschachtwand und seitliche Förderschachtwandbereiche gebildet.

Der Massestrom wird so durch den Durchsatz-Meßkondensator geleitet, daß er ein geschichtetes Dielektrikum mit einer annähernd homogenen Geschwindigkeitsverteilung bildet und durch einen zweiten Meßkondensator geführt, der stets ganz gefüllt ist. Die beiden Kapazitäten dieser Kondensatoren werden mit der gleichen Meßvorrichtung ermittelt, um ein Kapazitätenverhältnis zu bilden.

Die laufende Absolutwertmessung eines Körnerstromes in Erntemaschinen bringt erhebliche Vorteile bei der Nutzung des Meßwertes zur Regelung und Überwachung des Betriebes der Maschine, insbesondere der Vorschubgeschwindigkeit, der Siebantriebe und der Schnitthöhe. Sie erlaubt darüber hinaus die Erstellung eines Erntekatasters, das eine Grundlage für eine sich über Jahre erstreckende systematische, den jeweiligen Boden- und Ertragswerten angepaßte Bodenbearbeitung und Düngung ist.

Eine derartige Vorrichtung ist Gegenstand der deutschen Patentanmeldung P 41 05 857 A1.

Gemäß der DE-A-1 942 773 wird durch zwei Platten ein Hochfrequenzfeld erzeugt, das durch die durchfallenden Körner verändert wird, wobei die Veränderung des Hochfrequenzfeldes ein Maß für die Körnerverluste darstellt.

Die Meßvorrichtung ist in der Erntemaschine hinter dem Getreideelevator, z. B. einem Löffelbagger, in einem Bahnkrümmer angeordnet, in dem eine Durchmischung der Körner, die auf verschiedenen Bahnradien ausgeworfen werden und dabei verschiedene Geschwindigkeit haben, erfolgt, wobei die Zentrifugalkraft, die an der gebogenen Wandung auftritt, eine Verdichtung des Körnerstromes und eine Geschwindigkeitshomogenisierung bewirkt. Die glatte Führungsbahn und der vergleichmäßigte Körnerfluß schließt eine Beschädigung des empfindlichen Erntegutes aus.

Für die Kapazitätsvergleichsmessung eignen sich verschiedene Schaltungsanordnungen, bei denen vorteilhaft stets die gleiche Meßvorrichtung zur Messung beider Kapazitäten dient, so daß systematische Fehler sich weitgehend aufheben.

Eine erste geeignete Meßanordnung ist durch eine Trägerfrequenz-Meßbrücke gekennzeichnet, deren Eingang alternativ auf die beiden zu messenden Kapazitäten umgeschaltet wird und deren zugehörige Meßergebnisse miteinander in einem Rechner verglichen werden.

Eine weitere Schaltungsanordnung besteht darin, daß die beiden zu vergleichenden Kapazitäten als Brückenglieder in eine Trägerfrequenzbrücke geschaltet sind, so daß das Brückenausgangssignal ein Maß zur Bestimmung des Kapazitätenverhältnisses ist.

Eine andere Art der Kapazitäten-Verhältnismessung geschieht in einer Schaltung, in der eine Kapazitätsaufladung der Kondensatoren mit einer Stromquelle alternierend bis zu einer Vergleichsspannung vorgenommen wird, wobei die jeweils erforderlichen Ladezeiten der beiden Meßkondensatoren gemessen werden, die dann zu vergleichen sind.

Eine besonders schnelle und genaue Messung erbringt eine weitere Schaltungsanordnung, bei der die beiden zu vergleichenden Kapazitäten in den Zweigen einer Brückenschaltung angeordnet sind. Dabei erfolgt eine unmittelbare Verhältnisbildung, die dann noch nach dem bekannten funktionalen Zusammenhang der Brückenschaltung auf das Kapazitätenverhältnis zurückzuführen ist, was durch eine einfache Formelberechnung oder Tabellenzuordnung erfolgt. Diese funktionale Transformation läßt sich mit der ohnehin notwendigen funktionalen Verknüpfung des Kapazitätenverhältnisses mit der Funktion des geschichteten Dielektrikums kombinieren, so daß jeweils nur eine gemeinsame Verarbeitung eines Meßergebnisses durch einen Tabellenzugriff oder eine Funktionsberechnung erforderlich ist.

In einer Ausführung der Brückenmeßschaltung, die beide Meßkondensatoren in einem Meßzweig enthält, ist diese mit einer alternierenden Brückenspannung gespeist, die jeweils dann die Polarität wechselt, wenn jeweils ein oberer oder ein unterer vorgegebener Toleranzpunkt des Brückenabgleiches erreicht ist, wobei die jeweiligen Zeiten der beiden geschalteten Polaritäten gemessen werden, die dann ins Verhältnis gesetzt werden, woraus sich das Brückenverhältnis ergibt.

In allen vorstehenden Ausführungen der Meßanordnung ist, um möglichst genaue Meßergebnisse zu erzielen, die eine der Meßelektroden jedes Meßkondensators mit einer Schutzelektrode umgeben, die dem Potential der Meßelektrode elektronisch nachgeführt ist. Durch die Schutzelektrode soll gewährleistet werden, daß in dem Meßfeld ein annähernd paralleler Feldlinienverlauf gegeben ist; denn nur dann ergibt sich eine eindeutige funktionale Beziehung zwischen der Schichtungshöhe des zu messenden Dielektrikums und der Kapazität. Diese Beziehung dient der Umrechnung des jeweils originär gewonnenen Verhältniswertes. Bei der eingangs bezeichneten Anordnung der Schutzelektroden ist die geforderte Linearität der Feldlinien nur bei einer relativ geringen Massestromhöhe gewährleistet.

Außerdem stellt bei der eingangs bezeichneten Vorrichtung die Lage der Meßelektroden in Bezug auf den Bereich der optimalen Schichtbildung einen Kompromiß dar, da spezifisch leichte und spezifisch schwerere Körner unterschiedliche Wurfbahnverläufe aufweisen. Witterungsbedingt fallen Körnerströme mit relativ trockenen bzw. relativ feuchten Körnern in einer solchen Meßvorrichtung an. Insbesondere weist Getreide größerer Feuchtigkeit eine andere Wurfbahn als trockneres gleiches Getreide auf, da es einen anderen Reibungskoeffizienten hat, was die Umlenkung beeinflußt. Ferner bildet sich bei feuchten Körnern ein durchgehender, sich über den Kondensatorbelag und die Schutzelektrode erstreckender Wasserfilm. Aufgrund dieses Wasserfilmes fließen störende Leckströme zwischen den Elektroden. Durch diesen ohmschen Leitungsanteil wird die Kapazitätsmessung verfälscht.

Bei der in der deutschen Patentanmeldung P 41 05 857 A1 beschriebenen Vorrichtung sind zur Vermeidung solcher Leckströme die Oberflächen der Meßelektroden sowie der Schutzelektroden mit einer isolierenden Beschichtung versehen. Bei dieser Beschichtung ist jedoch die Abnutzung der Isolierschicht durch Abrieb - hervorgerufen durch den Körnerstrom - ein großes Problem. Darüber hinaus kommt es beim Durchsatz von trockenen Körnern aufgrund der Reibung zwischen den Körnern und der Isolierschicht zu ebenfalls störenden statischen Aufladungen.

Es ist Aufgabe der Erfindung, die eingangs beschriebene Vorrichtung zur kapazitiven Messung eines Massestromes, insbesondere von Körnergut, so zu verbessern, daß sie bei relativ einfachem Aufbau auch bei hohen Durchsätzen und feuchten Körnerströmen eine hohe Meßgenauigkeit hat.

Die Lösung besteht darin, daß zusätzlich zur Schutzelektrode (R1) mindestens eine weitere Teilelektrode (R2) vorgesehen ist und sich die Schutzelektrode (R1) zumindest teilweise auf den Förderschachtseitenwänden zwischen den beiden Kondensatorbelägen (MC1, MC2) erstreckt.

Vorteilhafte Ausgestaltungen sind in den Unteransprüchen angegeben.

Auf den Zeichnungen sind Ausführungsbeispiele dargestellt, welche nachfolgend näher erläutert werden. Es zeigt:

Fig. 1 einen Vertikalschnitt durch die Meßvorrichtung mit Meßkondensatorenanordnung und Meßschaltung,

Fig. 2 einen Vertikalschnitt (II-II) durch den Förderkanal,

Fig. 3 einen vergrößerten Längsschnitt durch den Förderkanal mit schaltbaren Elektroden,

Fig. 4 einen Vertikalschnitt durch die Meßvorrichtung, wie in Fig. 1, jedoch mit einer zusätzlichen Kompensationsschaltung,

Fig. 5 einen Vertikalschnitt (I-I) durch den Förderkanal mit Meßkondensator, Schutzelektroden und Beschaltung.

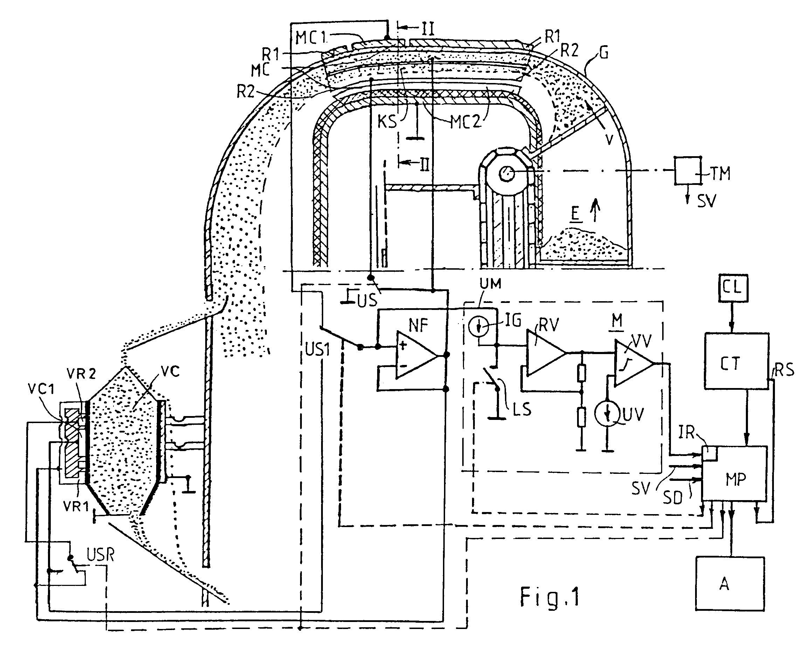

Fig. 1 zeigt den oberen Teil eines Getreideelevators (E), dessen Förderschacht (G) eine Ablenkung des endseitig herausgeschleuderten Körnerstromes (KS) in den ersten Meßkondensator (MC) bewirkt, so daß der Körnerstrom (KS) ein geschichtetes Dielektrikum quer zu dem Feldlinienverlauf bildet. Der Kondensator (MC) ist von einer Schutzelektrode (R1) umgeben, die mit dem Meßbelag (MC1) potentialmäßig mitgeführt ist. Die Gegenelektrode (MC2) kann isoliert angeordnet oder auch geerdet sein, je nach der angeschlossenen Meßanordnung.

Abstromseitig ist in dem Körnerstrom ein Vergleichskondensator (VC) angeordnet, der einen so geringen unteren Auslauf aufweist, daß er im kontinuierlichen Betrieb stets bis zum Überlaufen mit Körnern gefüllt ist. Auch bei diesem Vergleichskondensator (VC) ist die Meßelektrode (VC1) mit einer Schutzringelektrode (VR1) umgeben. Die Bezugselektrode des Vergleichskondensators (VC) ist mit der Bezugselektrode (MC2) elektrisch verbunden oder gemeinsam geerdet. Die beiden Schutzelektroden (R1, VR1) sind elektrisch miteinander verbunden, so daß nur ein Impedanzwandler als Potentialnachführungsverstärker (NF) erforderlich ist.

Am Antrieb des Elevators (E) ist ein Tachometer (TM) angeordnet, der ein Meßsignal (SV) der mittleren Körnerstromgeschwindigkeit (V) an eine Auswertevorrichtung (MP) signalisiert.

Das Kapazitätenverhältnis, das gemäß den genannten Funktionen umgewandelt ist, wird mit dem jeweiligen Wert des Geschwindigkeitssignales (SV) und einem vorgegebenen, spezifischen Dichtewert (SD) multipliziert, wodurch sich der Massestromwert ergibt, der einer Anzeigevorrichtung (A) direkt oder über einen Integrator zugeführt wird.

Das Signal (SV) des Geschwindigkeitssensors entspricht einer mittleren Geschwindigkeit der Körner, die beim Übergang der Elevatorschaufeln aus der Hubbewegung in die Drehbewegung mit dem Abstand von der Wendeachse zunimmt. Da die Körner durch ihre Zentrifugalkraft nach außen getrieben werden, interagieren sie derart durch Stöße, daß sie eine mittlere Geschwindigkeit (V) geringer Streubreite annehmen.

Da die Funktionen der Schichtung und der Homogenisierung des Körnerstromes nur in einem bestimmten Geschwindigkeitsbereich gewährleistet ist, überwacht der Auswerteprozessor (MP) die Einhaltung dieses zulässigen Geschwindigkeitsbereiches durch periodische Vergleiche des Geschwindigkeitssignalwertes (SV) mit einem oberen und einem unteren Grenzwert, bei deren Über- bzw. Unterschreitung er eine Alarmmeldung ausgibt.

Der Dichtewert (SD), der u. a. feuchtigkeitsabhängig ist, kann von Zeit zu Zeit ermittelt und in den Auswerteprozessor (MP) eingegeben werden, oder er wird mittels einer Wägezelle laufend gravimetrisch bestimmt und dem Prozessor (MP) kontinuierlich zugeführt.

Eine Meßschaltung (M) erbringt bei einfachem Aufbau eine Digitalisierung der Kapazitätswerte der beiden Kondensatoren (MC, VC).

Die Meßelektroden (MC1, VC1) der beiden Kondensatoren sind über einen Umschalter (US1) gesteuert wahlweise mit dem Eingang der Meßschaltung (M) verbunden. Dieser wird von einer Stromquelle (IG) gespeist und führt auf einen Rampensignalverstärker (RV), dessen Ausgang auf einen Vergleicher (VV) führt, dessen anderer Eingang mit einer Vergleichsspannung (UV) gespeist ist.

Der Auswerteprozessor (MP) ist eingangsseitig mit einem Ausgang eines Zählers (CT) verbunden, der von Taktsignalen (CL) laufend am Zählereingang beaufschlagt ist. Der Ausgang des Vergleichers (VV) steuert jeweils dann, wenn die Rampenspannung der Vergleichsspannung (UV) entspricht, einen Interrupteingang (IR) des Auswerteprozessors (MP) an. Dieser steuert daraufhin über einen Löschtransistor (LS) eine Entladung der Meßkapazität, die Verbringung des Umschalters (US1) in die jeweils andere Stellung, die Übernahme des Zählerinhalts in einen internen Speicher und ein Rücksetzen (RS) des Zählers (CT). Auf die gleiche Weise wird beim nächsten Erreichen der Vergleichsspannung (UV) ein weiterer Zählerstand in einen anderen internen Speicher übernommen, worauf jeweils die beiden gewonnenen Zählerstände, die den beiden Kapazitätswerten unmittelbar entsprechen, ins Verhältnis gesetzt werden. Der errechnete Verhältniswert wird dann der Funktion des geschichteten Dielektrikums gemäß weiterverarbeitet und dann mit dem Geschwindigkeitswert (SV) und einem Dichtewert (SD) verknüpft, so daß sich jeweils der Massestrom ergibt, der direkt oder integriert auf eine Ausgabevorrichtung (A) gegeben wird.

Gemäß der Erfindung ist die Schutzelektrode (R1) auf die Seitenwände des Förderschachtes (G) heruntergezogen, so daß die Feldlinien der Meßelektrode (MC1) zu der Gegenelektrode (MC2) annähernd parallel verlaufen und somit eine berechenbare Abhängigkeit der Körnerschichtdicke gegeben ist. Bei sehr hohen Körnerdurchsätzen ist es vorgesehen, die Schutzelektrode (R1) mit einem weiteren Teilelektrodenbereich (R2), der sich in Richtung auf den gegenüberliegenden Kondensatorbelag (MC2) erstreckt, zu verbinden um auch in diesen Fällen im Bereich des Körnerstromes (KS) eine möglichst parallele Feldausbildung zu erreichen. Bei niedrigem Stand des Körnerstromes (KS) wird die Teilelektrode (R2) vorteilhaft über einen Umschalter (US) mit der benachbarten Gegenelektrode (MC2) verbunden. Auch diese Gegenelektrode ist über den horizontalen Bereich hinaus auf die Seitenwände, diese zu einen Teil bedeckend, hinaufgezogen.

Der Umschalter (US), der die zweite Teilelektrode (R2) umschaltet, wird durch den Auswerteprozessor (MP) angesteuert. Die Umsteuerung erfolgt zweckmäßig dann, wenn die Auswertung ergibt, daß ein vorgegebener Schwellwert des Verhältnisses zwischen den Kapazitäten der beiden Kondensatoren (MC, VC) überschritten ist. Dieses Grenzverhältnis ist so gewählt, daß die Umschaltung erfolgt bevor der Füllgrad den Bereich der ersten Schutzelektrode (R1) erreicht.

Da mit der Umschaltung der Teilelektrode (R2) auch eine gewisse Kapazitätsänderung des Durchsatz-Meßkondensators (MC) auftritt, ist es vorteilhaft vorgesehen, auch den Vergleichskondensator (VC) außer mit einer Schutzelektrode (VR1) mit einer Teilelektrode (VR2) zu versehen, welche zwischen der Schutzelektrode (VR1) und der umfaßten Meßelektrode (VC1) angeordnet ist.

Die Kapazitätsverhältnisse dieser Teilelektrode (VR2) des Vergleichskondensators (VC) sind so gewählt, daß sie den Kapazitätsverhältnissen bei der Umschaltung der Teilelektrode (R2) des Meßkondensators (VC) entsprechen. Damit beide Kapazitäten (MC, VC) unabhängig von der Umschaltung sind, ist ein weiterer Umschalter (USR) für die Teilelektrode (VR2) des Vergleichskondensators vorgesehen, welcher analog zu dem ersten Umschalter (US) angeschlossen und parallel zu diesem angesteuert ist.

Statt der Anordnung des zweiten Umschalters (USR) läßt sich die Kapazitätsänderung durch eine entsprechende rechnerische Berücksichtigung bei der Verarbeitung der Meßwerte kompensieren.

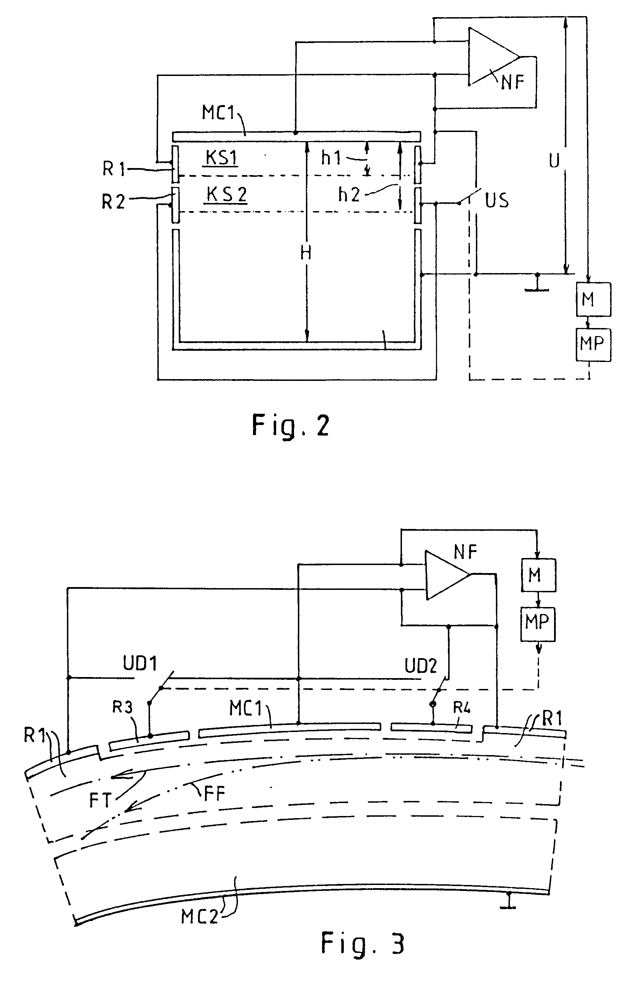

In Fig. 2, die einen Schnitt (II-II) in geändertem Maßstab zeigt, ist im Elevatorkopf eine Meßstrecke aufgebaut, bei der unter dem Einfluß von Fliehkräften an der Außenwand eine in ihrer Schichthöhe durchsatzproportionale Schichtung des Körnerstroms (KS1, KS2) festzustellen ist. Die auf diese Weise entstandene Körnerschicht bildet mit der angrenzenden Luftschicht das geschichtete Dielektrikum eines Plattenkondensators, der aus der mit einem Schutzring (R1) versehenen Meßelektrode (MC1) und aus der auf Massepotential liegenden Gegenelektrode (MC2) besteht. Bei dieser Anordnung ist bei jeweils geeigneter geometrischer Dimensionierung der Breite der Schutzringelektrode und der Meßelektrode (MC1) vor letzterer ein weitgehend homogenes elektrisches Feld ausgebildet, das eine hochgradig definierte, näherungsweise lineare, elektrisch meßtechnische Erfassung der Schichthöhe des Körnerstroms garantiert. Unter der Annahme, daß das elektrische Feld quer zur Stromrichtung der Körner unendlich ausgedehnt sei; d.h., daß seitlich keine Elektrodenwandungen eine Potentialbegrenzung vornehmen würden, bilden sich die unvermeidlichen Feldinhomogenitäten nur vor der Schutzringelektrode (R1) aus. Sie lassen sich so in sehr einfacher Weise durch eine Potentialnachführung mittels des Impedanzwandlers (NF) problemlos aus der Kapazitätserfassung eliminieren. Es ist vorteilhaft vorgesehen, daß die Schutzringelektrode (R1) durch den Impedanzwandler (NF) bis auf eine Fehlerspannung von maximal 1 µV ständig exakt der am Meßkondensator (MC1) anliegenden Meßspannung (UM) nachgeführt ist.

In dem Querschnitt sind die verschiedenen Höhen (h1, h2) bei einem niedrigen Körnerstrom (KS1) und einem hohen Körnerstrom (KS2) angedeutet. Die Formeln des geschichteten Dielektrikums beziehen sich auf die jeweils gegebene Höhe des Körnerstromes und die Gesamthöhe (H) zwischen den Kondensatorbelägen (MC1, MC2). Der Umschalter (US) schaltet die Teilelektrode (R2) jeweils zu dem zweiten Kondensatorbelag (MC2), wenn die Schichthöhe kleiner als ein Grenzwert ist, der beispielsweise der dargestellten niedrigen Körnerstromhöhe (h1) entspricht. Diese füllt zu etwa 80% die an den Seitenwänden angeordnete Schutzelektrode (R1) aus. Das Nutzsignal, die Meßspannung (UM), wird unmittelbar von dem ersten Kondensatorbelag abgenommen und der Meßverarbeitungsschaltung (M) und von dieser dem Auswerteprozessor (MP) zugeführt.

Da die elektrischen Feldlinien zu den Verschiebungsstromdichte-Linien streng parallel sind, ergibt sich für die beiden Schichten des Dielektrikums mit der Körnerschichtdicke (h1) und der Luftschichtdicke (H - h1) und den zugehörigen gemittelten elektrischen Feldstärken nach der Beziehung

$$\frac{E_H \cdot h1}{E_{h1}} = \frac{Epsilon_K}{Epsilon_L} \text{ etwa gleich } Epsilon_{rK}$$

eine relative Dielektrizitätskonstante $Epsilon_{rK}$ gemäß den Formeln für geschichtete Dielektrika, wobei die Indizes K und L für Körner bzw. Luft verwandt sind. Eine kapazitive Bestimmung der Körnerschichthöhe (h1) ist damit leicht möglich, da diese näherungsweise ausschließlich von der relativen Dielektrizitätskonstante der Körner bestimmt wird.

Der Vergleichskondensator (VC) läßt sich außer in einem ständigen Teilmassestrom auch in einem periodisch zu entleerenden Vorratstank (nicht dargestellt) anordnen, falls das Schüttgut über einen entsprechend langen Zeitraum bezüglich seiner kapazitiven Eigenschaft gleichartig ist. Bei einer derartigen Anordnung ist durch eine Vorabprüfung des Kapazitätsmeßwertes festzustellen, ob der Meßkondensator bereits gefüllt ist, d.h. der Vorratsbehälter schon entsprechend der Lage des Durchsatz-Meßkondensators (MC) teilweise gefüllt ist, da bis zu diesem Zeitpunkt der Kondensator eine feste vorbekannte Anfangskapazität aufweist, die durch das Dielektrikum Luft bestimmt ist. Bei dem Kapazitätenvergleich mit dem Meßkondensator (MC) mit dem geschichteten Dielektrikum wird vorab, solange der Vergleichskondensator (VC) noch nicht gefüllt ist, der Massestrom unter Berücksichtigung erfahrungsgemäßer Eichwerte der kapazitiven Eigenschaften für das gegebene Schüttgut näherungsweise bestimmt. Sobald der Meßkondensator (MC) in dem Vorratsbehälter gefüllt ist, und der aktuelle materialspezifische Vergleichswert der Kapazität vorliegt, was durch einen Vergleich des Kapazitätswertes auf seine zeitlich annähernde Konstanz und bei Überschreitung eines vorgegebenen Kapazitätsschwellwertes jeweils festgestellt wird, erfolgt die automatische Berücksichtigung der kapazitiven Materialeigenschaft. Darüber hinaus werden die vorher gemessenen und erfahrungsgemäß näherungsweise bestimmten Massewerte, die zwischengespeichert worden sind, entsprechend dem gemessenen kapazitiven Materialbeiwert korrigiert.

Die Messung der Kapazität des vollständig gefüllten Vergleichs-Kondensators (VC) wird weiterhin vorteilhaft dazu genutzt, gemäß einer Eichfunktion, die den Zusammenhang des Feuchtigkeitsgehaltes des Schüttgutes in Abhängigkeit von der gemessenen Kapazität angibt, die jeweilige Feuchtigkeit des Meßgutes zu bestimmen und durch eine Anzeige oder einen Ausdruck auszugeben.

Den funktionalen Zusammenhang der Dielektrizitätskonstanten Epsilon abhängig von dem Feuchtegehalt für Weizen ist in Kutzbach: Lehrbuch der Agrartechnik Bd. 1, Allgemeine Grundlagen, Ackerschlepper, Fördertechnik, angegeben. Für andere Materialien lassen sich entsprechende Funktionen des Kapazitätszusammenhanges des Meßkondensators von den Stoffeigenschaften bzw. -zusammensetzungen ermitteln. Die Umrechnung der gemessenen Kapazitätswerte läßt sich über Tabellenzugriffe und evtl. eine Interpolation zwischen den gespeicherten Werten leicht vornehmen. Somit läßt sich mit der dargestellten Funktion die Feuchtigkeit aus den Kapazitätenverhältnissen ermitteln, die sich aus der Kapazität des jeweils gefüllten Kondensators und einer einmaligen Messung der Kapazität mit völlig trockenem Gut der gleichen Art ermitteln.

Fig. 3 zeigt eine weitere vorteilhafte Ausgestaltung der Erfindung, welche auch mit der Ausgestaltung gemäß Fig. 1 und 2 kombinierbar ist. Bei dieser Anordnung ist der Kondensatorbelag (MC1) auf der Körnerstromseite wahlweise über Umschalter (UD1, UD2) mit einem Elektrodenabschnitt (R3) oder (R4) verbunden, von denen sich der eine abstromseitig und der andere zustromseitig des Kondensatorbelages (MC1) befindet. Die gesamte Anordnung des Belages und der beiden Teilelektroden ist von einer Schutzelektrode (R1) umfaßt, die sich auch auf den Seitenwänden des Förderschachtes erstreckt. In dem Förderschacht bewegt sie das Fördergut, wenn es sich um Trockenkörner (FT) handelt über einen langen Weg entlang der gekrümmten Außenwandung. Feuchtkörner (FF) bewegen sich hingegen aufgrund ihrer höheren Reibung an der Außenwand nur über einen Teilabschnitt in Wandnähe und weichen dann von dieser in einem verkürzenden Bogen ab. Damit die Messung jeweils in dem möglichst homogenen Körnerstrom erfolgt, wird deshalb die stromabseitige Teilelektrode (R3) zu dem Kondensatorbelag (MC1) hinzugeschaltet, wenn Trockenkörner (FT) vorliegen. Entsprechend wird die zustromseitige Teilelektrode (R4) dann zugeschaltet, wenn Feuchtkörner (FF) vorliegen. Die jeweils nicht mit der Meßelektrode zusammen benutzte Teilelektrode (R3, R4) wird durch ihren Umschalter (UD1, UD2) jeweils mit der Schutzelektrode (R1) verbunden. Die parallele Ansteuerung der beiden Umschalter (UD1, UD2) erfolgt über den Auswerteprozessor (MP) vermittels der Verwertung des Feuchtigkeitsmeßsignales, das, wie bereits beschrieben, insbesondere aus den Meßwerten des Vergleichskondensators (VC) gewonnen wird. Dies geschieht dadurch, daß jeweils dann, wenn eine für die entsprechende Getreideart vorgegebene Grenzgröße des Feuchtigkeitsgehaltes überschritten ist, die Teilelektrode (R3) die zustromseitig liegt zum Kondensatorbelag (MC1) hinzugeschaltet und die andere Teilelektrode (R4) an die Schutzelektrode (R1) angeschaltet wird. Zweckmäßig sind die beiden Teilelektroden (R3, R4) so ausgebildet, daß die Kapazität des jeweils mit diesen gebildeten Kondensatorbelages jeweils gleich ist.

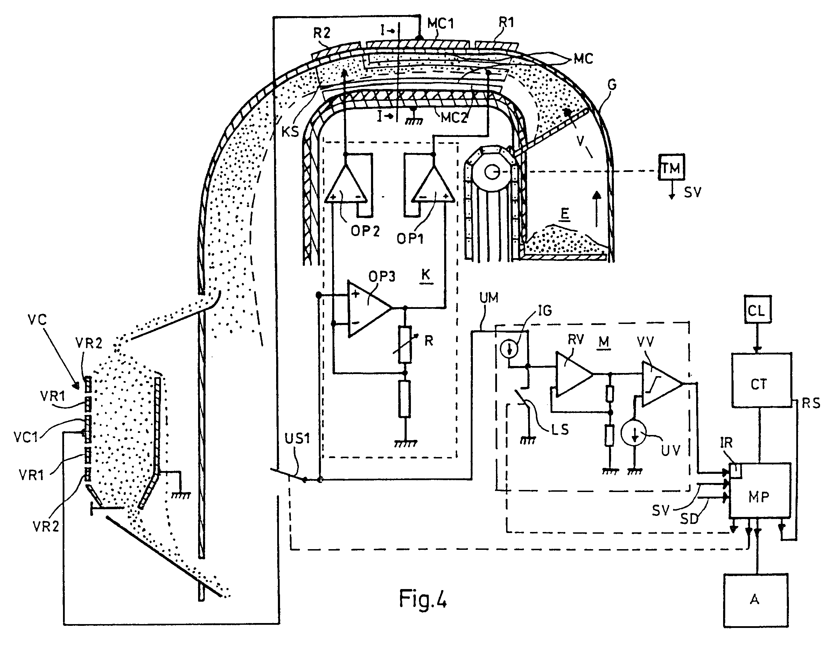

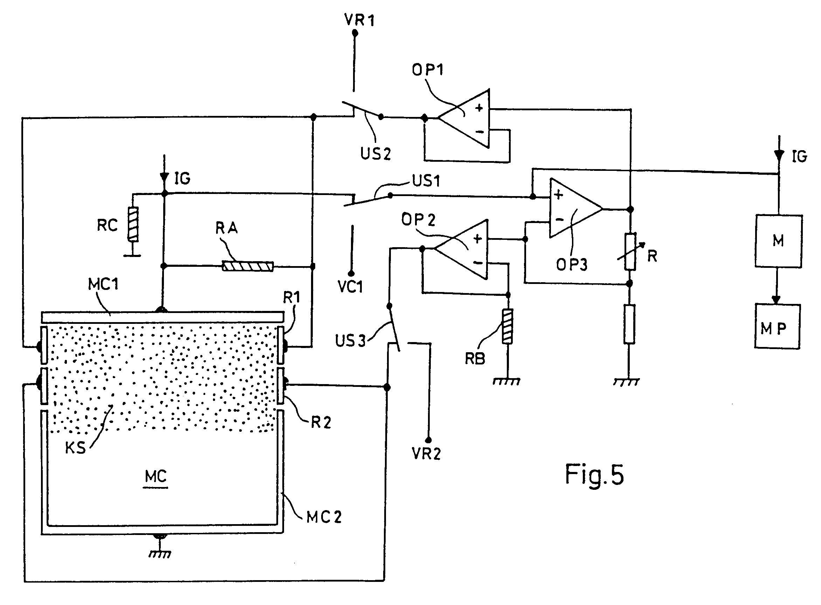

In Fig. 4 und 5 ist eine Kompensationsschaltung (K) gezeigt, mit der die beiden Schutzelektroden (R1, R2) der Meßelektrode (MC1) potentialmäßig nachgeführt sind, wobei die Schutzelektroden (R1, R2) so beschaltet sind, daß sie getrennt ansteuerbar Leckströme, die von der Meßelektrode (MC1) abfließen bzw. dieser zufließen, kompensieren. Bei Verwendung dieser Kompensationsschaltung (K) ist eine isolierende Beschichtung auf den Elektroden überflüssig.

Diese Leckströme treten bei einem durchgehenden, sich über die Elektrodenoberflächen erstreckenden Wasserfilm auf. Sie fließen zwischen der Meßelektrode (MC1) und der/den Schutzelektrode/n, zwischen der Meßelektrode (MC1) und der Gegenelektrode (MC2) sowie zwischen der/den Schutzelektrode/n und der Gegenelektrode (MC2). Durch diese ohmschen Leitungsanteile wird die Kapazitätsmessung verfälscht.

In Fig. 5 sind zur Verdeutlichung die entsprechenden Ersatzwiderstände (RA, RB, RC), über die die Leckströme fließen, eingezeichnet. Über diese Widerstände geht ein Teil des von der Stromquelle (IG) gelieferten Stromes verloren. Jeder der beiden Schutzelektroden (R1, R2) ist jeweils ein Impedanzwandler (OP1, OP2) zugeordnet. Diese Impedanzwandler (OP1, OP2) werden von einem Verstärker (OP3) angesteuert, der der Meßelektrode (MC1) zugeordnet ist und eingangsseitig von der Meßspannung (UM) gespeist wird.

So wird über den Impedanzwandler (OP2) und die Schutzelektrode (R2) hauptsächlich der Leckstrom kompensiert, der zwischen der Meßelektrode (MC1) und den Schutzelektroden (R1, R2) fließt. Über den Impedanzwandler (OP1) und die Schutzelektrode (R1) wird hauptsächlich der Leckstrom zwischen der Meßelektrode (MC1) und der Gegenelektrode (MC2) sowie zwischen den Schutzelektroden (R1, R2) und der Gegenelektrode (MC2) kompensiert. Der Verstärkungsfaktor des Verstärkers (OP3) und das Aufteilungsverhältnis der Kompensationsströme auf jeweils die Schutzelektroden (R1, R2) sind über einen veränderlichen Widerstand (R) auf den optimalen Wert einstellbar. In einer Ausführungsform sind die Impedanzwandler (OP1, OP2) und der Verstärker (OP3) von Operationsverstärkern gebildet.

Der Vergleichskondensator (VC) besitzt ebenfalls zwei Schutzelektroden (VR1, VR2), die die Meßelektrode (VC1) einfassen. Die Meßelektrode (VC1) und die Schutzelektroden (VR1, VR2) können über Umschalter (US1, US2, US3) mit der Kompensationsschaltung (K) verbindbar sein, so daß für den Durchsatz-Meßkondensator (MC) und den Vergleichskondensator (VC) nur eine gemeinsame Kompensationsschaltung (K) notwendig ist. In Fig. 1 ist aus Gründen der Übersicht nur der Umschalter (US1) dargestellt.

Bei den Umschaltern (US1, US2, US3) handelt es sich vorzugsweise um MOSFET-Transistoren oder Relaiskontakte.

Der Vergleichskondensator (VC) läßt sich vorteilhaft als Zylinderkondensator ausgestalten, wodurch nur geringe Randbereiche mit inhomogener Feldverteilung gegeben sind.

Diese Vorrichtung kann in Mähdreschern, Stroh-, Gras- oder Maishäckslern und in Heu-, Stroh- oder Grasaufnehmern verwendet werden.

Eine derartige Vorrichtung ist darüber hinaus überall dort einsetzbar, wo die Kapazität eines geschichteten Dielektrikums mit einem relativ hohen Feuchtigkeitsgehalt zu messen ist.

## Patentansprüche

1. Vorrichtung zur Messung eines Massestromes, der am Ausgang eines Elevators (E) an einer Förderschachtwandung (G), insbesondere einer Erntemaschine, umgelenkt wird, so daß er ein geschwindigkeitshomogenes, geschichtetes Dielektrikum in einem dort angeordneten Durchsatz-Meßkondensator (MC) bildet, dessen füllstandsabhängige Kapazität laufend gemessen wird,

   - wobei dessen erster Kondensatorbelag (MC1) massestromseitig und dessen zweiter Kondensatorbelag (MC2) beabstandet zum Massestrom angeordnet ist,

   - und wobei der erste Kondensatorbelag (MC1) mit einer Schutzelektrode (R1) eingefaßt ist, die durch einen Impedanzwandler mit dem eingefaßten Kondensatorbelag (MC1) auf gleichem Potential gehalten ist,

   - und wobei der zweite Kondensatorbelag (MC2) durch eine dem ersten Kondensatorbelag (MC1) gegenüberliegende Förderschachtwand und seitliche Förderschachtwandbereiche gebildet ist,

   dadurch gekennzeichnet, daß zusätzlich zur Schutzelektrode (R1) mindestens eine weitere Teilelektrode (R2) vorgesehen ist und sich die Schutzelektrode (R1) zumindest teilweise auf den Förderschachtseitenwänden zwischen den beiden Kondensatorbelägen (MC1, MC2) erstreckt.

**2.** Vorrichtung nach Anspruch 1, dadurch gekennzeichnet, daß sich die Schutzelektrode (R1, R2) mindestens über eine Höhe (h1, h2) des Massestromes (KS) erstreckt.

**3.** Vorrichtung nach Anspruch 1 oder 2, dadurch gekennzeichnet, daß zwischen dem zweiten Kondensatorbelag (MC2) und der ersten Teilschutzelektrode (R1) mindestens eine zweite Teilelektrode (R2) angeordnet ist, die mit einem Umschalter (US) gesteuert wahlweise mit der ersten Teilschutzelektrode (R1) als weitere Teilschutzelektrode wirkend oder mit dem zweiten Kondensatorbelag (MC2) als Teil von dieser wirkend verbindbar ist.

**4.** Vorrichtung nach Anspruch 3, dadurch gekennzeichnet, daß die Breite der zweiten Teilelektrode (R2) etwa einer Differenz der Höhen (h1, h2) der Masseströme (KS) bei einem niedrigen und bei einem hohen Massestrom entspricht.

**5.** Vorrichtung nach einem der vorstehenden Ansprüche, dadurch gekennzeichnet, daß beidseitig des ersten Kondensatorbelages (MC1) zwischen diesem und der Schutzelektrode (R1) förderschachtstirnwandseitig in Förderrichtung Teilelektroden (R3, R4) angeordnet sind, welche über weitere steuerbare Umschalter (UD1, UD2) wahlweise jeweils mit der Schutzelektrode (R1) oder mit dem ersten Kondensatorbelag (MC1) verbunden sind.

**6.** Vorrichtung nach Anspruch 5, dadurch gekennzeichnet, daß die beiden Teilelektroden (R3, R4) gleiche Kapazitäten haben und die beiden weiteren Umschalter (UD1, UD2) so als doppelpolige Umschalter gesteuert geschaltet sind, daß wechselweise jeweils die eine oder die andere der Teilelektroden (R3, R4) mit der Schutzelektrode (R1) verbunden sind.

**7.** Vorrichtung nach einem der Ansprüche 3 bis 6, dadurch gekennzeichnet, daß die Umschalter (US, UD1, UD2) MOSFET-Transistoren oder Relaiskontakte sind und diese über einen Auswerteprozessor (MP) gesteuert sind und der Durchsatz-Meßkondensator (MC) über eine Meßschaltung (M) mit dem Auswerteprozessor (MP) verbunden ist und die Meßschaltung (M) außerdem mit einem Vergleichskondensator (VC) eingangsseitig verbunden ist, der mit einem Teilmassestrom ständig gefüllt ist, zu dessen Vergleichskapazität die Meßkondensatorkapazität die Meßschaltung (M) ins Verhältnis setzt und diesen Kapazitätenverhältniswert dem Auswerteprozessor (MP) zuleitet, welcher jeweils abhängig von einer Überschreitung eines vorgegebenen Schwellwertes durch den Verhältniswert den Umschalter (US) derart ansteuert, daß die zweite Teilelektrode (R2) mit der ersten Schutzelektrode (R1) verbunden ist.

**8.** Vorrichtung nach Anspruch 7, dadurch gekennzeichnet, daß ein Kapazitätsmeßwert der Vergleichskapazität (VC) dem Auswerteprozessor (MP) zugeführt ist und dieser jeweils, wenn ein vorgegebener Vergleichswert überschritten ist, die weiteren Umschalter (UD1, UD2) derart ansteuert, daß die massezustromseitig gelegene Teilelektrode (R4) mit dem ersten Kondensatorbelag (MC1) verbunden ist.

**9.** Vorrichtung nach einem der vorstehenden Ansprüche, dadurch gekennzeichnet, daß die Teilelektrode (R2) als zweite getrennte Schutzelektrode dient, wobei die Schutzelektroden (R1, R2) und die Meßelektrode (MC1) über eine Kompensationsschaltung (K) so beschaltet sind, daß die Schutzelektroden (R1, R2) dem Potential der Meßelektrode (MC1) nachgeführt sind und dabei über die Kompensationsschaltung (K) und die Schutzelektroden (R1, R2) Leckströme ausgeglichen sind.

**10.** Vorrichtung nach Anspruch 9, dadurch gekennzeichnet, daß der Meßelektrode (MC1) ein eingangsseitig von der Meßspannung (UM) gespeister Verstärker (OP3) und jeder Schutzelektrode (R1, R2) ein Impedanzwandler (OP1, OP2) zugeordnet ist, wobei die Impedanzwandler (OP1,OP2) vom Verstärker (OP3) gesteuert sind und der Impedanzwandler (OP1, OP2) und der Verstärker (OP3) die Kompensationsschaltung (K) bilden.

**11.** Vorrichtung nach Anspruch 10, dadurch gekennzeichnet, daß der Verstärkungsfaktor des Verstärkers (OP3) und das Aufteilungsverhältnis der Kompensationsströme auf jeweils die Schutzelektroden (R1, R2) über einen veränderlichen Widerstand (R) am Verstärker (OP3) auf den optimalen Wert einstellbar sind.

**12.** Vorrichtung nach Anspruch 10, dadurch gekennzeichnet, daß die Impedanzwandler (OP1, OP2) und der Verstärker (OP3) von Operationsverstärkern gebildet sind.

**13.** Vorrichtung nach einem der vorstehenden Ansprüche, dadurch gekennzeichnet, daß sich die Schutzelektroden (R1, R2) zumindest teilweise auf den Förderschachtseitenwänden zwischen den Kondensatorbelägen (MC1, MC2) erstrecken.

14. Vorrichtung nach einem der vorstehenden Ansprüche, dadurch gekennzeichnet, daß der Vergleichskondensator (VC) mindestens zwei Schutzelektroden (VR1, VR2) aufweist und der Vergleichskondensator (VC) über Umschalter (US1, US2, US3) mit der Kompensationsschaltung (K) verbindbar ist.

## Claims

1. Device for measuring a mass flow which is deflected at the output of an elevator (E) at a feeding shaft wall (G), in particular of a harvesting machine, so that it forms a layered dielectric with homogenous speed in a throughput rate measuring capacitor (MC) arranged there, whose capacitance which is dependent on the filling level is continuously measured,

   - the first capacitor foil (MC1) of the said throughput rate measuring capacitor (MC) being arranged on the mass flow side and its second capacitor foil (MC2) being arranged at a distance from the mass flow,
   - and the first capacitor foil (MC1) being enclosed by a protective electrode (R1) which is kept at the same potential by an impedance transformer with the enclosed capacitor foil (MC1),
   - and the second capacitor foil (MC2) being formed by a feeding shaft well which lies opposite the first capacitor foil (MC1), and lateral areas of the feeding shaft wall,

   characterized in that, in addition to the protective electrode (R1), at least one further sub-electrode (R2) is provided and in that the protective electrode (R1) extends at least partially over the feeding shaft side walls between the two capacitor foils (MC1, MC2).

2. Device according to Claim 1, characterized in that the protective electrode (R1, R2) extends at least over a level (h1, h2) of the mass flow (KS).

3. Device according to Claim 1 or 2, characterized in that at least one second sub-electrode (R2) is arranged between the second capacitor foil (MC2) and the first protective sub-electrode (R1), which second sub-electrode (R2) can be connected to the change-over switch (US), optionally controlled by the first protective sub-electrode (R1) acting as a further protective sub-electrode, or to the second capacitor foil (MC2) acting as a part thereof.

4. Device according to Claim 3, characterized in that the width of the second sub-electrode (R2) corresponds approximately to a difference between the levels (h1, h2) of the mass flows (KS) at a low mass flow and at a high mass flow.

5. Device according to one of the preceding claims, characterized in that, on both sides of the first capacitor foil (MC1) between the latter and the protective electrode (R1), sub-electrodes (R3, R4) are arranged on the fading shaft end walls in the feeding direction, which sub-electrodes (R3, R4) are connected via further controllable change-over switches (UD1, UD2) either to the protective electrode (R1) in each case or to the first capacitor foil (MC1).

6. Device according to Claim 5, characterized in that the two sub-electrodes (R3, R4) have identical capacitances and the two further change-over switches (UD1, UD2) are connected, controlled as double-poled change-over switches, in such a way that in each case one or other of the sub-electrodes (R3, R4) are alternately connected to the protective electrode (R1).

7. Device according to one of Claims 3 to 6, characterized in that the change-over switches (US, UD1, UD2) are MOSFET transistors or relay contacts and the latter are controlled by means of an evaluation processor (MP) and the throughput rate measuring capacitor (MC) is connected to the evaluation processor (MP) via a measuring circuit (M), and the measuring circuit (M) is also connected to a comparison capacitor (VC) on the input side, which comparison capacitor (VC) is continuously filled with a sub-mass flow, the measuring circuit (M) placing the capacitance of the measuring capacitor in proportion to the comparison capacitance and feeding this capacitance proportion value to the evaluation processor (MP) which actuates the change-over switch (US) in each case as a function of a prescribed threshold value being exceeded by the proportion value, such that the second sub-electrode (R2) is connected to the first protective electrode (R1).

8. Device according to Claim 7, characterized in that a capacitance measurement value of the comparison capacitor (VC) is fed to the evaluation processor (MP) and whenever a prescribed comparison value is exceeded the latter actuates the further change-over switches (UD1, UD2) such that the sub-electrode (R4) which is located on the mass inflow side is connected to the first capacitor foil (MC1).

**9.** Device according to one of the preceding claims, characterized in that the sub-electrode (R2) serves as a second separate protective electrode, the protective electrodes (R1, R2) and the measuring electrode (MC1) being connected via a compensation circuit (K) in such a way that the protective electrodes (R1, R2) are made to follow the potential of the measuring electrode (MC1) and, during this process, leakage currents are compensated via the compensation circuit (K) and the protective electrodes (R1, R2).

**10.** Device according to Claim 9, characterized in that an amplifier (OP3) which is fed on the input side via the measuring voltage (UM) is assigned to the measuring electrode (MC1) bind an impedance transformer (OP1, OP2) is assigned to each protective electrode (R1, R2), the impedance transformers (OP1, OP2) being controlled by the amplifier (OP3) and the impedance transformer (OP1, OP2) and the amplifier (OP3) forming the compensation circuit (K).

**11.** Device according to Claim 10, characterized in that the amplification factor of the amplifier (OP3) and the dividing ratio of the compensation currents over each of the protective electrodes (R1, R2) can be adjusted to the optimum value by means of a variable resistor (R) at the amplifier (OP3).

**12.** Device according to Claim 10, characterized in that the impedance transformers (OP1, OP2) and the amplifier (OP3) are formed by operational amplifiers.

**13.** Device according to one of the preceding claims, characterized in that the protective electrodes (R1, R2) extend at least partially over the feeding shaft side walls between the capacitor foils (MC1, MC2).

**14.** Device according to one of the preceding claims, characterized in that the comparison capacitor (VC) has at least two protective electrodes (VR1, VR2) and the comparison capacitor (VC) can be connected to the compensation circuit (K) via change-over switches (US1, US2, US3).

## Revendications

**1.** Dispositif de mesure du débit massique d'un flux de matière, qui est dévié à la sortie d'un élévateur (E) au niveau d'une paroi de canal de transport (G), en particulier d'une moissonneuse, de telle sorte qu'il forme un diélectrique stratifié, ayant une vitesse homogène dans un condensateur de mesure de débit (MC) disposé à cet endroit, dont la capacité, qui est fonction de l'état de remplissage, est mesurée en continu, étant entendu

- que la première lame de condensateur (MC1) est disposée du côté du flux de matière et la deuxième lame de condensateur (MC2) est espacée du flux de matière,
- et que la première lame de condensateur (MC1) est bordée par une électrode de protection (R1) qui est maintenue au même potentiel que la lame de condensateur bordée (MC1) par un transformateur d'impédance,
- et que la deuxième lame de condensateur (MC2) est formée par une paroi de canal de transport opposée à la première lame de condensateur (MC1) et par des régions latérales de paroi de canal de transport,

caractérisé en ce qu'au moins une autre électrode partielle (R2) est prévue en plus de l'électrode de protection (R1) et en ce que l'électrode de protection (R1) s'étend au moins en partie sur les parois latérales de canal de transport entre les deux lames de condensateur (MC1, MC2).

**2.** Dispositif suivant la revendication 1, caractérisé en ce que l'électrode de protection (R1, R2) s'étend au moins sur une hauteur (h1, h2) du flux de matière (KS).

**3.** Dispositif suivant la revendication 1 ou 2, caractérisé en ce qu'entre la deuxième lame de condensateur (MC2) et la première électrode partielle de protection (R1) est disposée au moins une deuxième électrode partielle (R2), qui commandée à l'aide d'un commutateur (US), peut être connectée au choix à la première électrode partielle de protection (R1) en tant qu'autre électrode partielle de protection ou à la deuxième lame de condensateur (MC2) en tant que partie de celle-ci.

**4.** Dispositif suivant la revendication 3, caractérisé en ce que la largeur de la deuxième électrode partielle (R2) correspond à peu près à une différence des hauteurs (h1, h2) du flux de matière (KS) dans le cas d'un débit massique faible et dans le cas d'un débit massique élevé.

**5.** Dispositif suivant l'une quelconque des revendications précédentes, caractérisé en ce que des deux côtés de la première lame de condensateur (MC1), entre celle-ci et l'électrode de protection (R1), du côté de la paroi frontale du canal de transport dans la direction de transport sont disposées des électrodes partielles (R3, R4) qui sont connectées par l'intermédiaire de commutateurs supplémentaires que l'on peut commander (UD1, UD2) au choix à l'électrode de protection (R1) ou à la première lame de condensateur (MC1).

6. Dispositif suivant la revendication 5, caractérisé en ce que les deux électrodes partielles (R3, R4) ont les mêmes capacités et les deux commutateurs supplémentaires (UD1, UD2) ainsi que le commutateur bipolaire sont commandés en commutation, de telle sorte que tour à tour, l'une ou l'autre des électrodes partielles (R3, R4) soit à chaque fois connectée avec l'électrode de protection (R1).

7. Dispositif suivant l'une quelconque des revendications 3 à 6, caractérisé en ce que les commutateurs (US, UD1, UD2) sont des transistors MOS à effet de champ ou des contacts de relais et sont commandés via un processeur d'évaluation (MP), le condensateur de mesure de débit (MC) est connecté par l'intermédiaire d'un circuit de mesure (M) au processeur d'évaluation (MP), et le circuit de mesure (M) est en outre connecté du côté de l'entrée à un condensateur de référence (VC), qui est rempli en permanence d'un flux de matière partiel, et le circuit de mesure (M) met la capacité du condensateur de mesure en rapport avec la capacité de référence du condensateur de référence et achemine cette valeur de rapport de capacités au processeur d'évaluation (MP), qui commande le commutateur (US) à chaque fois en fonction d'un dépassement d'une valeur seuil prédéterminée par la valeur de rapport, de telle sorte que la deuxième électrode partielle (R2) soit connectée avec la première électrode de protection (R1).

8. Dispositif suivant la revendication 7, caractérisé en ce qu'une valeur mesurée de capacité de la capacité de référence (VC) est amenée au processeur d'évaluation (MP) et celui-ci, chaque fois qu'une valeur de référence prédéterminée est dépassée, commande les commutateurs supplémentaires (UD1, UD2), de telle sorte que l'électrode partielle (R4) située du côté de l'afflux de matière soit connectée à la première lame de condensateur (MC1).

9. Dispositif suivant l'une quelconque des revendications précédentes, caractérisé en ce que l'électrode partielle (R2) sert de deuxième électrode de protection séparée, étant entendu que les électrodes de protection (R1, R2) et l'électrode de mesure (MC1) sont couplées par l'intermédiaire d'un circuit de compensation (K), de telle sorte que les électrodes de protection (R1, R2) soient commandées en fonction du potentiel de l'électrode de mesure (MC1) et dès lors, que les courants de fuite soient compensés par le circuit de compensation (K) et les électrodes de protection (R1, R2).

10. Dispositif suivant la revendication 9, caractérisé en ce qu'à l'électrode de mesure (MC1) est associé un amplificateur (OP3) alimenté à l'entrée par la tension de mesure (UM) et à chaque électrode de protection (R1, R2) est associée un transformateur d'impédance (OP1, OP2), étant entendu que les transformateurs d'impédance (OP1, OP2) sont commandés par l'amplificateur (OP3) et que les transformateurs d'impédance (OP1, OP2) et l'amplificateur (OP3) forment le circuit de compensation (K).

11. Dispositif suivant la revendication 10, caractérisé en ce que le gain de l'amplificateur (OP3) et le rapport de répartition des courants de compensation sur chacune des électrodes de protection (R1, R2) peuvent être réglés à la valeur optimale au niveau de l'amplificateur (OP3) au moyen d'une résistance variable (R).

12. Dispositif suivant la revendication 10, caractérisé en ce que les transformateurs d'impédance (OP1, OP2) et l'amplificateur (OP3) sont formés par des amplificateurs opérationnels.

13. Dispositif suivant l'une quelconque des revendications précédentes, caractérisé en ce que les électrodes de protection (R1, R2) s'étendent au moins en partie sur les parois latérales du canal de transport entre les lames de condensateur (MC1, MC2).

14. Dispositif suivant l'une quelconque des revendications précédentes, caractérisé en ce que le condensateur de référence (VC) présente au moins deux électrodes de protection (VR1, VR2) et le condensateur de référence (VC) peut être connecté au circuit de compensation (K) par l'intermédiaire des commutateurs (US1, US2, US3).

Fig.1

Fig. 2

Fig. 3

Fig. 4

Fig.5